# EUROPÄISCHE PATENTANMELDUNG

(11) **EP 4 060 882 A1**
(43) Veröffentlichungstag der Anmeldung: **21.09.2022**
(21) Anmeldenummer: 21162943.1
(22) Anmeldetag: 16.03.2021
(51) Int. Cl.: H02K 15/02, H02K 1/06

(54) **VERFAHREN ZUR HERSTELLUNG EINES MAGNETBLECHSTAPELS, MAGNETBLECHSTAPEL UND ELEKTRISCHE MASCHINE**

(71) Anmelder: Siemens Aktiengesellschaft, 80333 München (DE)
(72) Erfinder: Schuh, Carsten, 85598 Baldham (DE)

(57) **Zusammenfassung**

Die Erfindung betrifft ein Verfahren zur Herstellung eines Magnetblechstapels (2) für eine elektrische Maschine umfassend folgende Schritte:
- Herstellung von Magnetblechen (6) mittels eines Siebdruckverfahrens,
- Vermessung der Topografie der zu stapelnden Magnetbleche,
- Einspeisen von Topografiedaten in einen Computer (8),
- Berechnung einer Stapelfolge (10), in der sich ein maximaler Füllgrad des Magnetblechstapels (2) einstellt,
- Aufbau des Magnetblechstapels nach dem Ergebnis der Berechnung.

## Beschreibung

Die Erfindung betrifft ein Verfahren zur Herstellung eines Magnetblechstapels nach Patentanspruch 1 sowie einen Magnetblechstapel nach Patentanspruch 13 und eine elektrische Maschine nach Patentanspruch 14.

Ein neues Verfahren zur Herstellung von Magnetblechen für elektrische Maschinen, insbesondere Elektromotoren, aber auch Generatoren, stellt der Sieb- bzw. Schablonendruck dar. Hierbei wird, ausgehend von Metallpulvern zunächst eine Druckpaste erzeugt, welche dann mittels einer Sieb- oder Schablonendrucktechnik zu einem Grünkörper in Form einer Dickschicht verarbeitet wird. Anschließend wird der entstandene Grünkörper durch thermische Behandlung, insbesondere Entbinderung und einer Sinterung, in ein metallisches strukturiertes Blech überführt. Dieses Blech kann gelegentlich auch aus verschiedenen Materialien in seiner Fläche aufgebaut sein, um entsprechenden Werkstoffeigenschaften Genüge zu leisten. In diesem Fall spricht man von einem Kompositblech.

Prinzipbedingt zeichnen sich mittels eines solchen Sieb- oder Schablonendruckverfahrens hergestellte Magnetbleche durch erhöhte Dickentoleranzen im Vergleich zu Blechen aus, die durch eine Walztechnik entstanden sind. Dies kann sowohl Unterschiede in der mittleren Dicke der verschiedenen Blecheinheiten betreffen als auch Dickenschwankungen innerhalb eines Blechs, welche sich in über den Umfang unregelmäßig verteilten Dickenwerten äußern. Besonders häufig treten dabei keilförmige oder schüsselförmige, konkave Querschnittsformen auf. Um in einem Blechpaket einen möglichst hohen Füllgrad zu erzielen, werden die herstellungsbedingten Unregelmäßigkeiten der einzelnen Bleche beim Zusammenbau des Blechpaketes bzw. des Magnetblechstapels durch ein mechanisches Verpressen der einzelnen Bleche im Stapel minimiert. Zudem werden Verklebungen vorgenommen, wobei Bereiche, die durch mechanisches Verpressen nicht ohne Weiteres ausgeglichen werden können, mit einem zusätzlichen Klebstoff als Füllmaterial ausgeglichen werden. Hieraus können jedoch unerwünschte mechanische Verspannungen der Einzelbleche im Magnetblechstapel resultieren oder die mechanische Festigkeit im Gesamtverbund des Magnetblechstapels so reduziert sein, dass Delaminationsrisse entstehen. Zudem ist es stets wünschenswert, einen möglichst hohen Füllgrad an Material mit den gewünschten magnetischen Eigenschaften im Magnetblechstapel zu haben. Hierbei ist ein höherer Anteil an Klebstoff, beispielsweise einem Harz, abträglich.

Die Aufgabe der Erfindung besteht darin, ein Verfahren zur Herstellung eines Magnetblechstapels sowie einen Magnetblechstapel an sich und eine elektrische Maschine bereitzustellen, die gegenüber dem Stand der Technik im Magnetblechstapel eine geringere mechanische Verspannung der einzelnen Magnetbleche sowie einen erhöhten Füllgrad an magnetisch wirksamem Material aufweisen.

Die Lösung der Aufgabe besteht in einem Verfahren zur Herstellung eines Magnetblechstapels mit den Merkmalen des Patentanspruchs 1, in einem Magnetblechstapel nach Patentanspruch 13 und in einer elektrischen Maschine mit den Merkmalen des Patentanspruchs 14.

Das erfindungsgemäße Verfahren zur Herstellung eines Magnetblechstapels für eine elektrische Maschine nach Patentanspruch 1 umfasst dabei zumindest folgende Schritte: Zunächst werden Magnetbleche mittels eines Siebdruckverfahrens, wobei unter dem Begriff Siebdruckverfahren auch der Begriff Schablonendruckverfahren subsumiert wird, hergestellt. Im Weiteren werden die so hergestellten Magnetbleche bezüglich ihrer Topografie vermessen. Die gemessenen Topografiedaten der einzelnen zu stapelnden Magnetbleche werden in einen Computer eingespeist, wonach eine Berechnung einer Stapelfolge erfolgt, in der sich ein, gegenüber einer wahllosen Stapelung verbesserter, bevorzugt maximaler Füllgrad des Magnetblechstapels einstellt. Im Weiteren wird der Magnetblechstapel nach dem Ergebnis der Berechnung aufgebaut.

Durch die Messung der Topografie der einzelnen Magnetbleche können Unterschiede in den Auswölbungen durch entsprechendes Aufeinanderlegen kompensiert werden. Somit ist es möglich, den Füllgrad des Magnetblechstapels zu erhöhen, was dazu führt, dass weniger mechanische Kräfte auf die einzelnen Magnetbleche im Magnetblechstapel durch ein abschließendes Verpressen ausgeübt werden müssen. Die Gesamtfestigkeit des Magnetblechstapels, insbesondere seine Zug- bzw. Biegewechselfestigkeit und seine Beständigkeit gegenüber hohen Zentripetalkräften bei hohen Rotationsgeschwindigkeiten in der elektrischen Maschine, werden durch diese Maßnahme erheblich verbessert. Außerdem ist es möglich, zusätzliches Füllmaterial, beispielsweise in Form von Gießharzen, zu reduzieren, weshalb der gesamte Magnetblechstapel in seinem Volumen auf Material mit den besten magnetischen Eigenschaften konzentriert ist.

Unter Siebdruckverfahren oder auch unter einem Schablonendruckverfahren wird grundsätzlich ein Verfahren verstanden, wobei durch ein Sieb oder eine Schablone auf eine Oberfläche eine druckfähige Paste aufgedruckt und in einem anschließenden Trocknungsprozess zu einem handhabbaren Grünkörper wird. Da ein solcher gedruckter Grünkörper für sich genommen noch kein belastbares Bauteil in Form eines Magnetbleches darstellt, werden in der Regel weitere Wärmebehandlungsprozesse angefügt, insbesondere in Form eines Entbinderungs- und eines Sinterprozesses, durch die der gedruckte Grünkörper zu einem Strukturteil verfestigt wird.

Die so erzeugten Magnetbleche sind in der Regel im Wesentlichen kreisscheibenförmig ausgestaltet, wobei sie dabei konzeptbedingte Aussparungen aufweisen, insbesondere Aussparungen, die im Magnetblechstapel Kanäle bzw. Nuten bilden, um darin Leiterschleifen zu verlegen. Bei der Berechnung einer bestmöglichen Stapelfolge für die kreisscheibenförmigen Magnetbleche ist es dabei zweckmäßig, die Topografiedaten des Magnetbleches in der Art auszuwerten, dass eine Drehung der Magnetbleche um einen Kreismittelpunkt mit einbezogen wird. Somit können insbesondere keilförmige Unebenheiten von verschiedenen Magnetblechen eben durch die Drehung um den Kreismittelpunkt kompensiert werden.

Eine andere bevorzugte Möglichkeit zur Kompensierung sowohl von keilförmigen Unebenheiten als auch von schüsselförmigen Unebenheiten besteht darin, die im Wesentlichen kreisscheibenförmigen Magnetbleche um ihren Durchmesser als Drehachse zu drehen und diese Drehung zur Optimierung in die Berechnung der Magnetblechstapelfolge mit einzubeziehen.

Eine Kombination der Drehung der Magnetbleche um ihren Kreismittelpunkt bzw. um ihren Durchmesser als Achse bietet bereits so viele Optimierungsmöglichkeiten, dass bei einer hohen Anzahl von zur Verfügung stehenden Magnetblechen, die insbesondere größer ist als die für den jeweiligen Magnetblechstapel benötigte Anzahl, ein sehr hoher Füllgrad des Magnetblechstapels mit magnetisch relevantem Material in Form von Magnetblechen erzielt wird.

Sollten weiterhin noch Materialaussparungen im Magnetblechstapel nicht vermeidbar sein, so kann es zweckmäßig sein, die beim Aufbau des Magnetblechstapels berechneten, nicht ausgefüllten Volumenbereiche durch Ausgleichselemente, die nach den berechneten Daten angefertigt werden, auszufüllen. Hierfür wiederum bieten sich additive Herstellungsverfahren an. Beispielsweise durch Laserschmelzverfahren oder mittels eines Kaltspritzverfahrens können hochgenau Ausgleichselemente hergestellt werden, die zwischen die Magnetbleche zur Optimierung des Volumenfüllgrades eingestapelt werden.

Betrachtet man eine Anzahl von Magnetblechen, die größer ist als die Anzahl, die für den Magnetblechstapel an sich benötigt wird, so erhöht sich die Chance, dass bei der Berechnung der optimalen Stapelfolge und Stapelorientierung ein höherer Füllgrad erzielt werden kann. Daher ist es zweckmäßig, mindestens 10 % mehr Magnetbleche topografisch zu vermessen und in die Berechnung mit einzubeziehen, als diese für den eigentlichen Stapel nötig wären.

Wie bereits erwähnt, ist es zur optimalen Verbindung und zur Erzielung eines optimalen Füllgrades zweckmäßig, die Magnetbleche miteinander zu verkleben.

Im Weiteren ist es vorteilhaft, dass die Magnetbleche während oder nach dem Vermessen der Topografie markiert und/oder individualisiert werden. Auf diese Weise ist es möglich, die einzelnen Bleche an die dafür vorgesehene Position in der errechneten Stapelfolge zu bringen. Ferner ist ein Roboter besonders geeignet, die Magnetbleche in die richtige Stapelfolgen zu setzen, wenn ihm durch den Computer die entsprechenden Informationen zur Stapelfolge zugeleitet werden.

Ein weiterer Bestandteil der Erfindung ist ein Magnetblechstapel, der nach einem Verfahren nach einem der Ansprüche 1 - 12 hergestellt ist. Ferner ist ein Teil der Erfindung eine elektrische Maschine, beispielsweise ein Elektromotor oder ein Generator, der einen Magnetblechstapel nach Anspruch 13, insbesondere als Rotor- oder Statormagnetblechstapel umfasst.

Weitere Beispiele sowie weitere Ausgestaltungsformen der Erfindung werden anhand der folgenden Figuren näher erläutert. Dabei handelt es sich um rein schematische Ausgestaltungsformen, die keine Einschränkung des Schutzbereichs darstellen. Merkmale mit derselben Bezeichnung, aber unterschiedlichen Ausgestaltungsformen, können dabei mit denselben Bezugszeichen versehen sein.

### Dabei zeigen:

- Figur 1: eine schematische Darstellung des Verfahrens zur Herstellung eines Magnetblechstapels mit abschließender Darstellung eines Magnetblechstapels,
- Figur 2: einen schematischen Querschnitt durch einen Magnetblechstapel und
- Figur 3: eine Draufsicht auf Magnetbleche mit unterschiedlichen Topografiecharakteristika.

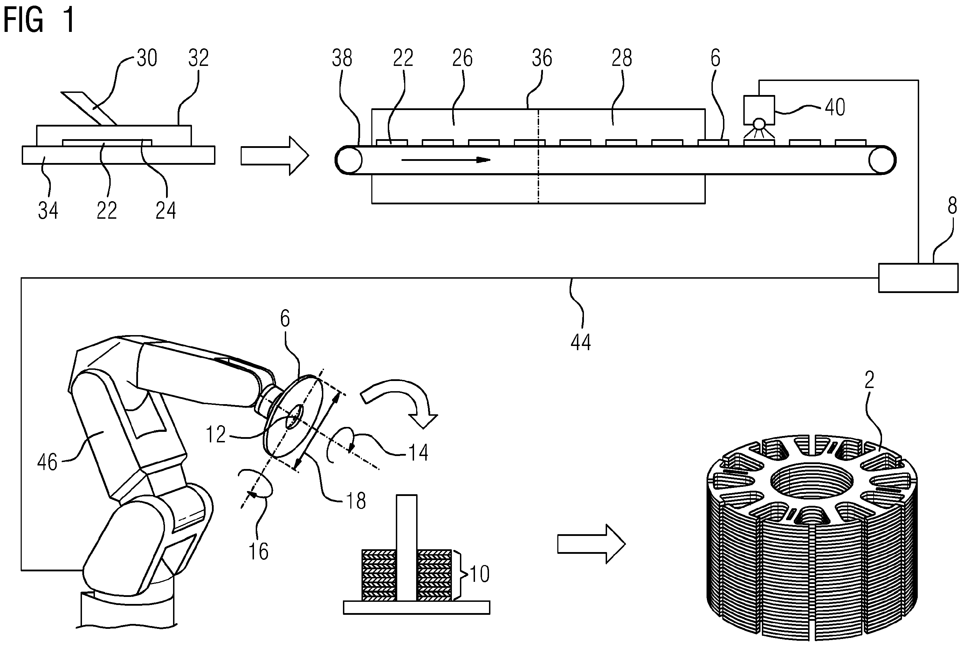

In Figur 1 wird zunächst mittels eines Rakels 30 durch ein Sieb 32 eine Siebdruckpaste 24 auf ein Substrat 34 gepresst (gedruckt) und anschließend getrocknet, sodass ein Grünkörper 22 entsteht. Der Grünkörper 22 wird bevorzugt von dem Substrat 34 gelöst und hier schematisch dargestellt in einen Tunnelofen 36 gegeben. Hierbei stellt der Tunnelofen 36 eine exemplarische Herstellungsvariante dar, die besonders gut für einen kontinuierlichen Herstellungsprozess geeignet ist. Grundsätzlich sind jedoch auch andere Ofenarten, die mit Füllung verschiedener Chargen arbeiten, auch großtechnisch zweckmäßig. Der Tunnelofen 36 umfasst in dieser schematischen Darstellung zwei Zonen, eine Entbinderungszone 26 und eine Wärmebehandlungszone 28. Wenn der Grünkörper 22 über ein Förderband 38 durch den Tunnelofen 36 befördert wird, wird er in der Entbinderungszone 26 auf eine Temperatur von etwa 200 - 400° C erhitzt, sodass alle insbesondere organischen Bestandteile, die zur Gewährleistung der entsprechenden Viskosität der Siebdruckpaste 24 dienen, entweder verdampft oder thermisch zersetzt werden. Im Wärmebehandlungsbereich 28 wird der Grünkörper 22 nun auf eine deutlich höhere Temperatur hochgeheizt. Die Temperatur, die bei der Wärmebehandlung 28 anliegt, entspricht im Wesentlichen der Sintertemperatur des Materials, das als funktionaler Bestandteil der Siebdruckpaste 24 verdruckt wird. Hierbei handelt es sich bei Magnetblechen bevorzugt um ein ferromagnetisches Material, das jedoch auch weitere Komponenten zur gezielten Einstellung von Werkstoffeigenschaften in bestimmten Bereichen des Magnetbleches 6 umfassen kann. Ein typisches Material ist hierfür nahezu reines Eisen, das beispielsweise eine Reinheit von 98 % und mehr aufweist. Für das hier genannte Eisen liegt die Sintertemperatur zwischen 1.000 und 1.400° C. Beim Sintern wird darauf geachtet, dass möglichst keine Aufschmelzung der einzelnen Partikel des zu sinternden Materials, also der hier im Beispiel genannten Eisenpartikel, erfolgt. Daher liegt die Sintertemperatur unterhalb der Schmelztemperatur des zu sinternden Materials.

Insbesondere der Wärmebehandlungsbereich 28 des Tunnelofens 36 ist dabei bevorzugt mit einer Inertgasatmosphäre, also einer Schutzgasatmosphäre oder einem Vakuum, versehen, sodass Oxidationsprozesse des zu sinternden Materials des Magnetbleches 6 verhindert werden. Aus diesem Grund kann es auch zweckmäßig sein, den Entbinderungsprozess 26 und den Wärmebehandlungsprozess 28 in zwei getrennten, hier nicht dargestellten Tunnelöfen 36 oder Chargieröfen zu betreiben. Das Objekt, das beim Einspeisen in die Entbinderungszone 26 des Tunnelofens 36 als Grünkörper 22 bezeichnet wird, wird nach Verlassen des Wärmebehandlungsbereiches 28, also nach dem Sinterprozess, als Magnetblech 6 bezeichnet.

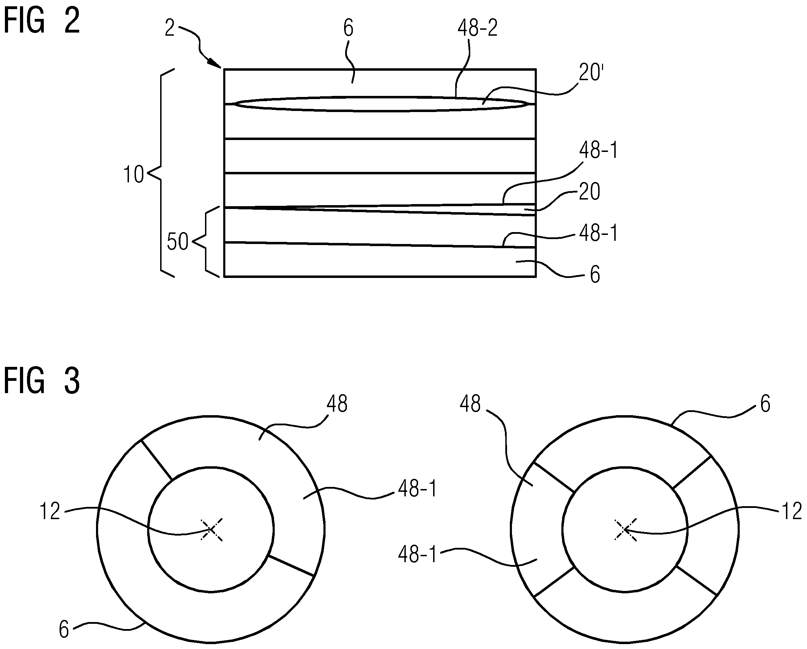

Das aus dem Tunnelofen 36 herausgefahrene Magnetblech 6 wird ggf. noch einer Oberflächenbehandlung unterzogen und anschließend mittels eines geeigneten Messgerätes, hier beispielsweise eines 3D-Profilometers 40, bezüglich seiner Topografie vermessen. Das 3D-Profilometer 40 speist die gemessenen Topografiedaten der einzelnen Magnetbleche 6 in einen Computer 8 ein, der aufgrund der Topografiedaten einer Vielzahl von Magnetblechen 6 eine optimale Stapelfolge 10 errechnet. Auf charakteristische Geometrieformen innerhalb der Stapelfolge 10 wird in den Figuren 2 und 3 noch eingegangen. Unter dem Computer 8 wird grundsätzlich eine Recheneinheit verstanden, die beispielsweise direkt in den Produktionsprozess integriert sein kann, die jedoch auch außerhalb des Produktionsprozesses in einem Cloud-Bereich integriert sein kann.

Die errechnete Stapelfolge 10 wird von dem Computer 8 über eine Verbindung 44 an eine geeigneten Vorrichtung zur Stapelung der Magnetbleche 6 weitergeleitet. Die Vorrichtung ist hier in Form eines Industrieroboters 46 dargestellt. Durch den Roboter 46 werden die vermessenen und auch individuell markierten Magnetbleche 6 in die vom Computer 8 bestimmte Position gedreht. Hierbei kann es Drehungen um den Kreismittelpunkt 12 geben, was hier als erste Drehung 14 bezeichnet ist. Weiterhin ist eine zweite Drehung 16 entlang eines Durchmessers 18 als Achse zweckmäßig. Durch Drehungen 14 und 16 können Stapelfolgen 10 realisiert werden, die einen nur sehr geringen Rest an Hohlraum, also einen sehr hohen Füllgrad, aufweisen. Als Resultat der gestapelten Magnetbleche ist in Figur 1 schematisch ein Magnetblechstapel 2 dargestellt.

In Figur 2 ist ein Querschnitt durch einen Magnetblechstapel 2 mit einer Stapelfolge 10 exemplarisch dargestellt. Im Weiteren wird bei der Abweichung eines Magnetbleches 6 von seiner optimalen, zylinderförmigen Topografie von einer Topografieanomalie 48 gesprochen. Im unteren Bereich der Stapelfolge 10 in Figur 2 sind zwei Magnetbleche 6 dargestellt, bei denen ein Anomalieausgleich 50 durch die in Figur 1 beschriebenen Drehungen erfolgt. Dabei weisen beide in der Zone 50 dargestellten Magnetbleche 6 eine keilförmige Topografieanomalie 48-1 auf. Ein derartiger Anomalieausgleich 50 ist bei der Betrachtung einer Vielzahl von Magnetblechen, die mindestens 10 % höher liegt als die für die Stapelfolge 10 benötigte Anzahl an Magnetblechen 6, durchaus realisierbar und bildet idealerweise den Normalfall ab. Durch diesen Anomalieausgleich 50 ist es in der Regel möglich, einen sehr hohen Füllgrad des Magnetblechstapels 2 allein mit den Maßnahmen, die in Figur 1 beschrieben sind, zu erzielen.

Um den Füllgrad des Magnetblechstapels 2 noch weiter zu erhöhen, kann es jedoch auch zweckmäßig sein, Ausgleichselemente 20 bzw. 20' einzufügen. Dies geschieht dann, wenn durch alle Maßnahmen, die in Figur 1 beschrieben sind, noch weitere Hohlräume im Magnetblechstapel zurückbleiben würden. Diese Ausgleichselemente 20, 20` werden ebenfalls durch ein additives Herstellungsverfahren hergestellt. Besonders gut geeignet sind hierbei Laserschmelzverfahren oder Kaltgas-Spritzverfahren. Auf diese Art und Weise können dann nach den Vorgaben, die bei der Berechnung der Stapelfolge 10 ermittelt werden, die entsprechenden Ausgleichselemente 20, 20' anhand der vorliegenden Anomalien 48, der keilförmigen Topografieanomalie 48-1 oder der konkaven Topografieanomalie 48-2, angefertigt werden und in die Stapelfolge 10 integriert werden. Bei den beschriebenen Topografieanomalien 48-1, 48-2 handelt es sich um beispielhafte und typische Anomalien, andere derartige Verformungen treten aber ebenfalls auf. Ein bevorzugtes Material zur Herstellung solcher Ausgleichselemente stellt dabei ein gleiches oder zumindest ähnliches Material dar, aus dem auch die Magnetbleche selbst bestehen. Das ist insbesondere Eisen.

In Figur 3 ist noch eine Draufsicht auf Magnetbleche 6 gegeben, wobei verschiedene Topografieanomalien 48, insbesondere 48-1, in ihrer Anordnung auf dem Magnetblech 6 dargestellt sind. Diese Anomalien 48 können beim Siebdruckprozess durch minimale Abweichungen des Anpressdruckes des Rakels 30 bzw. der Rakelgeschwindigkeit oder aber auch durch Viskositätsschwankungen der Siebdruckpaste hervorgerufen werden.

### Bezugszeichenliste

- 2: Magnetblechstapel
- 4: elektrische Maschine
- 6: Magnetblech
- 8: Computer
- 10: Stapelfolge
- 12: Kreismittelpunkt
- 14: erste Drehung
- 16: zweite Drehung
- 18: Durchmesser
- 20: Ausgleichselement
- 22: Grünkörper
- 24: Siebdruckpaste
- 26: Entbindern
- 28: Wärmebehandlung
- 30: Rakel
- 32: Sieb
- 34: Substrat
- 36: Tunnelofen
- 38: Förderbauer
- 40: 3D Profilmeter
- 42: Verbindung Computer
- 44: Verbindung mit Roboter
- 46: Roboter
- 48: Topographieanomalien
- 48-1: keilförmige T-Anomalie
- 48-2: konkave T-Anomalie
- 50: Anomalieausgleich

## Patentansprüche

1. Verfahren zur Herstellung eines Magnetblechstapels (2) für eine elektrische Maschine umfassend folgende Schritte:
- Herstellung von Magnetblechen (6) mittels eines Siebdruckverfahrens,
- Vermessung der Topografie der zu stapelnden Magnetbleche,
- Einspeisen von Topografiedaten in einen Computer (8),
- Berechnung einer Stapelfolge (10), in der sich ein maximaler Füllgrad des Magnetblechstapels (2) einstellt,
- Aufbau des Magnetblechstapels nach dem Ergebnis der Berechnung.

2. Verfahren nach Anspruch 1, **dadurch gekennzeichnet, dass** die Magnetbleche (6) im Wesentlichen kreisscheibenförmig ausgestaltet sind und eine erste Drehung (14) bezüglich des Kreismittelpunktes (12) in die Berechnung der Stapelfolge (10) mit einbezogen wird.

3. Verfahren nach Anspruch 1 oder 2, **dadurch gekennzeichnet, dass** eine zweite Drehung (16) der im Wesentlichen kreisscheibenförmigen Magnetbleche (6) um den Durchmesser als Drehachse in die Berechnung mit einbezogen wird.

4. Verfahren nach Anspruch 1 bis 3, **dadurch gekennzeichnet, dass** ein Ausgleichselement (20) hergestellt wird, das in den Magnetblechstapel (6) mit eingebracht wird.

5. Verfahren nach Anspruch 4, **dadurch gekennzeichnet, dass** das Ausgleichselement (20) mittels eines additiven Herstellungsverfahrens hergestellt wird.

6. Verfahren nach Anspruch 5, **dadurch gekennzeichnet, dass** das Ausgleichselement (20) mittels eines Laserschmelzverfahren oder mittels eines Kaltspritzverfahrens hergestellt wird.

7. Verfahren nach einem der vorhergehenden Ansprüche, **dadurch gekennzeichnet, dass** die Anzahl der vermessenen und für die Berechnung der Stapelfolge (10) in Betracht gezogenen Magnetbleche (6) um mindestens 10 % größer ist als die für den Magnetblechstapel (2) benötigte Anzahl an Magnetblechen (6) .

8. Verfahren nach einem der vorhergehenden Ansprüche, **dadurch gekennzeichnet, dass** die Herstellung der Magnetbleche (2) mittels des Siebdruckverfahrens folgende Schritte umfasst:
Drucken eines Grünkörpers (22) mit Siebdruckpaste (24),
Entbindern (26) des Grünkörpers (22),
Wärmebehandlung (28) des Grünkörpers (22) zur Umwandlung in das Magnetblech (6).

9. Verfahren nach einem der vorhergehenden Ansprüche, **dadurch gekennzeichnet, dass** Magnetbleche (6) miteinander verklebt werden.

10. Verfahren nach einem der vorhergehenden Ansprüche, **dadurch gekennzeichnet, dass** das Stapeln der Magnetbleche (6) zum Magnetblechstapel (2) mittels eines Roboters (46) erfolgt, der Informationen zur Stapelfolge (10) vom Computer (8) erhält.

11. Verfahren nach einem der vorhergehenden Ansprüche, **dadurch gekennzeichnet, dass** die Magnetbleche während oder nach dem Vermessen der Topografie markiert werden.

12. Verfahren nach einem der vorhergehenden Ansprüche, **dadurch gekennzeichnet, dass** die Magnetbleche während oder nach dem Vermessen der Topografie individualisiert werden.

13. Magnetblechstapel umfassend mehrere Magnetbleche, hergestellt mittels eines Verfahrens nach einem der Ansprüche 1 bis 12.

14. Elektrische Maschine, umfassend einen Magnetblechstapel (2) nach Anspruch 13.
